# EUROPÄISCHE PATENTANMELDUNG

(11) **EP 3 242 101 A1**
(43) Veröffentlichungstag der Anmeldung: **08.11.2017**
(21) Anmeldenummer: 16168274.5
(22) Anmeldetag: 04.05.2016
(51) Int. Cl.: F27D 19/00, C21C 7/10, F27D 21/00, G01N 21/15, G02B 23/24

(54) **VERFAHREN ZUM BETREIBEN EINES SCHUTZGASSYSTEMS BEI EINER VAKUUMANLAGE UND VAKUUMANLAGE**

(71) Anmelder: Primetals Technologies Germany GmbH, 91052 Erlangen (DE)
(72) Erfinder: Pezza, Andrea, 77731 Legelshurst (DE); Buehler, Willi Anton, 77855 Achern (DE); Martinez Cerezo, Jose David, 77654 Offenburg (DE)
(74) Vertreter: Metals@Linz

(57) **Zusammenfassung**

Die Erfindung betrifft ein Verfahren zum Betreiben eines Schutzgassystems (16, 32, 52) bei einer Vakuumanlage (2), wobei das Schutzgassystem (16, 32, 52) eine Schutzgasquelle (18) und die Vakuumanlage (2) einen mit Innendruck (6) beaufschlagten Innenraum (4) sowie ein zumindest teilweise im Innenraum (4) angeordnetes zu schützendes Gerät (14) aufweist, bei dem Schutzgas aus der Schutzgasquelle (18) dem Innenraum (4) zugeführt wird, wobei die Zuführung so erfolgt, dass zumindest ein in dem Innenraum (4) angeordnetes Teil des zu schützenden Geräts (14) von dem Schutzgas angeströmt wird. Um das Anströmen zu optimieren wird vorgeschlagen, dass ein Parameter des Schutzgases beim Anströmen in Abhängigkeit des Innendrucks (6) zumindest gesteuert wird.

## Beschreibung

Die Erfindung betrifft ein Verfahren zum Betreiben eines Schutzgassystems bei einer Vakuumanlage, wobei das Schutzgassystem eine Schutzgasquelle und die Vakuumanlage einen mit Innendruck beaufschlagten Innenraum sowie ein zumindest teilweise im Innenraum angeordnetes zu schützenden Gerät aufweist, bei dem Schutzgas aus der Schutzgasquelle dem Innenraum zugeführt wird, wobei die Zuführung so erfolgt, dass zumindest ein in dem Innenraum angeordnetes Teil des zu schützenden Geräts von dem Schutzgas angeströmt wird.

In Vakuumanlagen, insbesondere in sekundär-metallurgischen Vakuumanlagen, kann eine Vakuumbehandlung von flüssigem Metall, d. h. eine Vakuumbehandlung einer Metallschmelze, durchgeführt werden. Die Vakuumbehandlung von flüssigem Metall, insbesondere von flüssigem Stahl, dient der Verbesserung der Qualität des Metalls. Typische Vakuumbehandlungen sind beispielsweise die Vakuum-Entgasung (Vacuum Degassing), die Vakuum-Sauerstoff-Entkohlung (Vacuum Oxygen Decarburisation) und das Ruhrstahl-Heraeus-Verfahren.

Um den Prozess der Vakuumbehandlung beobachten zu können und/oder um die Qualität der Metallschmelze besser feststellen zu können, wird häufig eine Kamera eingesetzt, welche direkt in die Vakuumanlage eingebracht wird. Um das Objektiv der Kamera vor Abgasen, Staub und anderen Stoffen, welche sich ablagern können, zu schützen, wird aus einer Schutzgasquelle über ein Ventil bzw. über eine Ventilanlage Schutzgas dem Innenraum zugeführt, wobei das zu schützende Gerät, hier die Kamera bzw. das Objektiv der Kamera, von dem Schutzgas angeströmt wird.

Das Zuführen von Schutzgas in den Innenraum der Vakuumanlage bringt große Nachteile mit sich, denn das Schutzgas verursacht eine erhebliche Gaslast für die Vakuumpumpen. Die Gaslast muss bei der Wahl der Vakuumpumpen berücksichtig werden, sodass in der Regel größer dimensionierte - und damit teurere - Vakuumpumpen nötig werden als bei einem Betrieb der Vakuumanlage ohne Kamera und Schutzgas.

Neben der Gaslast, die das Schutzgas verursacht, zieht der große Verbrauch an Schutzgas auch erhebliche Betriebskosten nach sich.

Eine Aufgabe der Erfindung ist es, ein Verfahren zum Betreiben eines Schutzgassystems anzugeben, bei dem das Anströmen optimiert wird.

Diese Aufgabe wird durch ein Verfahren der eingangs genannten Art gelöst, bei dem erfindungsgemäß ein Parameter des Schutzgases beim Anströmen in Abhängigkeit des Innendrucks zumindest gesteuert wird.

Kurz und knapp ausgedrückt, wird zweckmäßigerweise das Anströmen in Abhängigkeit des Innendrucks zumindest gesteuert.

Als "zumindest gesteuert" kann gesteuert und/oder geregelt verstanden werden. Im Folgenden meint "gesteuert" bzw. "Steuern" "zumindest gesteuert" bzw. "zumindest Steuern". Vorzugsweise wird das Anströmen unter Verwendung einer Steuereinheit gesteuert. Insbesondere kann das Anströmen unter Verwendung einer Regeleinheit gesteuert werden, insbesondere geregelt werden.

Als "anströmen" bzw. "Anströmen" kann verstanden werden, dass zumindest ein Teil des Schutzgases an eine und/oder entlang einer Oberfläche des zumindest in dem Innenraum angeordneten Teils des zu schützenden Geräts strömt. Weiter kann das Anströmen ein Anblasen sein.

Durch das Steuern eines Parameters des Schutzgases beim Anströmen kann das Anströmen optimiert werden. Beispielsweise kann durch das Steuern eine geringere Menge an Schutzgas nötig werden. Weiterhin kann durch das Steuern des zumindest einen in dem Innenraum angeordneten Teils des zu schützenden Geräts derart angeströmt werden, sodass z. B. eine Verschmutzung des Teils des zu schützenden Geräts effektiver verhindert wird.

Als Innendruck kann ein Druck im Innenraum der Vakuumanlage verstanden werden. Der Innendruck kann einem Umgebungsdruck, insbesondere einem Atmosphärendruck, entsprechen. Zweckmäßigerweise ist der Innendruck der Vakuumanlage ein Unterdruck, welcher geringer ist als der Umgebungsdruck.

Es ist zweckmäßig, wenn die Vakuumanlage ein Druckmessgerät umfasst. Zweckmäßigerweise ist das Druckmessgerät im Innenraum der Vakuumanlage angeordnet. Außerdem kann der Innendruck in der Vakuumanlage beispielsweise unter Verwendung des Druckmessgeräts ermittelt werden.

Beispielsweise kann das zu schützende Gerät eine Kamera bzw. ein Objektiv einer Kamera sein. Weiter kann das zu schützende Gerät ein Sauerstoffzuführsystem, ein Flammenüberwachungssystem und/oder ein Zündbrenner sein.

Das Schutzgassystem kann ein Teil der Vakuumanlage sein. Weiter können das Schutzgassystem und die Vakuumanlage zwei separate/voneinander getrennte Anlagen/Systeme sein, welche örtlich und/oder funktionell miteinander verbunden sind. Insbesondere kann das Schutzgassystem auch als Schutzgasanlage und/oder Schutzgaseinrichtung bezeichnet werden.

Der Parameter des Schutzgases, welcher gesteuert wird, kann beispielsweise eine Richtung des Schutzgases, eine Dauer des Anströmens, ein zeitliches Schema (kontinuierlich, gepulst oder ähnliches) des Anströmens, ein Druck des Schutzgases, ein Volumenstrom an Schutzgas, ein Massestrom an Schutzgas, eine Temperatur des Schutzgases, eine chemische Zusammensetzung des Schutzgases und/oder ein Öffnungsquerschnitt, insbesondere eine Öffnungsquerschnittfläche und/oder -form, über welche(n) das Schutzgas dem Innenraum zugeführt wird, sein. Prinzipiell können auch mehrere Parameter des Schutzgases gesteuert werden.

Das Schutzgassystem kann eine Öffnung aufweisen. Vorzugsweise ist die Öffnung in abströmender Richtung der Schutzgasquelle angeordnet. Weiter kann das Schutzgas über die Öffnung dem Innenraum der Vakuumanlage zugeführt werden. Ferner kann das Schutzgas über die Öffnung in den Innenraum der Vakuumanlage entlassen und/oder geblasen werden.

Die Öffnung kann eine beliebige Querschnittsform aufweisen, z. B. rund, oval, schlitzförmig usw. Weiter kann an der Öffnung beispielsweise eine Düse platziert sein.

Das Anströmen kann beispielsweise dadurch gesteuert werden, dass die Öffnung in eine andere Richtung geschwenkt wird und/oder die Öffnung ihre Querschnittsfläche und/oder ihre Querschnittsform ändert.

Vorteilhafterweise wird dem Innenraum ein Volumenstrom an Schutzgas zugeführt. Weiter ist es bevorzugt, wenn der Parameter des Schutzgases, welcher gesteuert wird, der Volumenstrom an Schutzgas ist, welcher dem Innenraum zugeführt wird.

Auf diese Weise kann durch das Steuern eine deutlich geringere Menge an Schutzgas eingesetzt werden als bisher üblich. Dadurch verringert sich die Gaslast auf die Vakuumpumpe(n). Somit können kleiner dimensionierte - und damit günstigere - Vakuumpumpen eingesetzt werden. Außerdem verringern sich durch die geringere Menge an verbrauchtem Schutzgas die Betriebskosten.

Als Volumenstrom an Schutzgas kann das Volumen an Schutzgas verstanden werden, welches zweckmäßigerweise pro Zeiteinheit durch einen festgelegten Querschnitt transportiert wird. Der festgelegte Querschnitt kann z. B. ein Querschnitt eines Auslasses der Schutzgasquelle sein. Weiter kann der festgelegte Querschnitt die Querschnittsfläche der Öffnung sein, über welche Öffnung das Schutzgas dem Innenraum der Vakuumanlage zugeführt werden kann.

Vorteilhafterweise kann der Volumenstrom an Schutzgas einstellbar sein. Beispielsweise kann der Volumenstrom an Schutzgas stufenweise und/oder kontinuierlich einstellbar sein. Insbesondere beim Steuern kann der Volumenstrom an Schutzgas eingestellt werden, z. B. indem der Volumenstrom an Schutzgas erhöht und/oder reduziert wird.

Beispielsweise kann der Volumenstrom an Schutzgas reduziert werden, wenn der Innendruck sinkt. Insbesondere kann der Volumenstrom an Schutzgas zumindest stufenweise, insbesondere kontinuierlich, reduziert werden, wenn der Innendruck sinkt.

Falls der Innendruck einen vorgegebenen Innendruck-Schwellwert unterschreitet, dann wird vorzugsweise der Volumenstrom an Schutzgas reduziert. Der vorgegebenen Innendruck-Schwellwert kann beispielsweise 50 mbar, 40 mbar, 30 mbar, 20 mbar, 10 mbar oder 5 mbar sein. Prinzipiell kann der Innendruck-Schwellwert beliebig gewählt werden.

Falls der Innendruck den vorgegebenen Innendruck-Schwellwert unterschreitet, dann kann beispielsweise der Volumenstrom an Schutzgas kontinuierlich reduziert werden. Falls der Innendruck den vorgegebenen Innendruck-Schwellwert unterschreitet, dann wird vorzugsweise der Volumenstrom stufenweise reduziert, z. B. auf 20%, 10% und/oder 5%. Das heißt, falls der Innendruck den Innendruck-Schwellwert überschreitet, dann wird zweckmäßigerweise dem Innenraum der Vakuumanlage ein maximaler Volumenstrom (100%) zugeführt. Weiter heißt das, falls der Innendruck den Innendruck-Schwellwert unterschreitet, dann wird zweckmäßigerweise dem Innenraum der Vakuumanlage ein reduzierter Volumenstrom zugeführt, welcher z. B. 20%, 10% und/oder 5% des maximalen Volumenstroms entspricht.

In einer bevorzugten Ausgestaltung der Erfindung umfasst die Ventilanlage ein Regelventil. Weiter ist es vorteilhaft, wenn das Regelventil in abströmender Richtung der Schutzgasquelle angeordnet ist. Zweckmäßigerweise ist das Regelventil zumindest stufenweise, insbesondere kontinuierlich, einstellbar. Weiter ist es vorteilhaft, wenn das Regelventil zumindest stufenweise, insbesondere kontinuierlich, eingestellt wird. Beispielsweise kann der Volumenstrom an Schutzgas mittels des Regelventils, insbesondere beim Steuern, zumindest stufenweise, insbesondere kontinuierlich, eingestellt werden.

Zweckmäßigerweise umfasst das Schutzgassystem eine Ventilanlage. Weiter ist es vorteilhaft, wenn die Ventilanlage in abströmender Richtung der Schutzgasquelle angeordnet ist. Die Ventilanlage kann zumindest ein Ventil umfassen. Beispielsweise kann das Ventil das zuvor genannte Regelventil sein.

Als stufenweise einstellbar kann in diesem Zusammenhang verstanden werden, dass die Ventilanlage bzw. das Regelventil neben einer Geschlossen-Stellung und einer Offen-Stellung zumindest eine Zwischenstellung umfasst. Auf diese Weise kann die Ventilanlage bzw. das Regelventil zumindest stufenweise einstellbar sein.

Falls der Innendruck einen vorgegebenen Innendruck-Schwellwert, insbesondere den zuvor genannten Innendruck-Schwellwert, unterschreitet, dann ist zweckmäßigerweise ein vom Regelventil eingestellter Volumenstrom an Schutzgas, insbesondere der zuvor genannte Volumenstrom an Schutzgas, umso kleiner, je niedriger der Innendruck ist.

In einer vorteilhaften Ausgestaltung der Erfindung umfasst das Schutzgassystem eine Parallelschaltung aus einer ersten Leitung und einer zweiten Leitung. Vorzugsweise ist die Parallelschaltung in abströmender Richtung der Schutzgasquelle angeordnet. Zweckmäßigerweise ist die erste Leitung der Parallelschaltung für einen ersten Volumenstrom ausgelegt. Weiter ist es sinnvoll, wenn die zweite Leitung der Parallelschaltung für einen zweiten Volumenstrom ausgelegt ist. Vorzugsweise ist der zweite Volumenstrom eine Teilmenge des ersten Volumenstroms. Die Teilmenge kann eine vorgegebene Teilmenge sein, z. B. 5%, 10% oder 20%. Weiter kann die Teilmenge (manuell und/oder automatisch) eingestellt werden oder fest vorgegeben sein.

Zweckmäßigerweise wird, insbesondere beim Steuern, über die Ventilanlage eingestellt, welche der Leitungen geöffnet ist. Es können/kann die erste Leitung und/oder die zweite Leitung geöffnet sein/werden. Das heißt, es kann keine der Leitungen oder eine der Leitungen geschlossen sein/werden. Weiter können alle Leitungen geschlossen sein/werden.

Falls der Innendruck einen vorgegebenen Innendruck-Schwellwert, insbesondere den zuvor genannten Innendruck-Schwellwert, unterschreitet, dann wird zweckmäßigerweise über die Ventilanlage die erste Leitung geschlossen. Falls der Innendruck den vorgegebenen Innendruck-Schwellwert unterschreitet, wird außerdem zweckmäßigerweise über die Ventilanlage die zweite Leitung geöffnet. Auf diese Weise kann der Volumenstrom an Schutzgas, welcher dem Innenraum zugeführt wird, gesteuert werden.

Beispielsweise kann die Ventilanlage ein Drei-Wege-Ventil umfassen. Das Drei-Wege-Ventil kann einen Eingang aufweisen. Weiter kann das Drei-Wege-Ventil einen ersten Ausgang aufweisen. Außerdem kann das Drei-Wege-Ventil einen zweiten Ausgang aufweisen. Die erste Leitung der Parallelschaltung kann sich an den ersten Ausgang des Drei-Wege-Ventils anschließen. Ferner kann sich die zweite Leitung der Parallelschaltung an den zweiten Ausgang des Drei-Wege-Ventils anschließen.

Beim Steuern, insbesondere mittels der Steuereinheit, können/kann der erste Ausgang und/oder der zweite Ausgang des Drei-Wege-Ventils geöffnet werden/sein. Weiter können beim Steuern beide Ausgänge geschlossen werden/sein.

In einer bevorzugten Ausgestaltung der Erfindung umfasst die Ventilanlage ein erstes Steuerventil. Weiter ist es vorteilhaft, wenn die Ventilanlage ein zweites Steuerventil umfasst. Außerdem kann die Ventilanlage ein Drosselventil umfassen. Das erste Steuerventil kann in der ersten Leitung angeordnet sein. Ferner kann das zweite Steuerventil in der zweiten Leitung angeordnet sein. Außerdem kann das Drosselventil in der zweiten Leitung angeordnet sein. Auf diese Weise kann das Drosselventil in Reihe zu dem zweiten Steuerventil angeordnet sein.

Beim Steuern, insbesondere mittels der Steuereinheit, können/kann das erste Steuerventil und/oder das zweite Steuerventil geöffnet werden/sein. Weiter können beim Steuern beide Steuerventile geschlossen werden/sein.

Zweckmäßigerweise wird das Steuern bzw. die Steuerung zumindest teilautomatisch durchgeführt, insbesondere unter Verwendung der Steuereinheit. Unter einem teilautomatischen Steuern kann verstanden werden, dass ein Teilschritt des Steuerns anderweitig als von der Steuereinheit selbst ausgeführt wird, beispielsweise von einer handelnden Person, wobei andere Teilschritte von der Steuereinheit selbst ausgeführt werden. Beispielsweise kann eine handelnde Person ein Einstellen des Volumenstroms an Schutzgas per Knopfdruck veranlassen und/oder bestätigen.

Insbesondere kann das Steuern bzw. die Steuerung vollautomatisch durchgeführt werden, insbesondere ohne manuelles Einwirken einer Person.

Vorzugsweise ist das Schutzgas ein Inertgas, beispielsweise Stickstoff.

Vorteilhafterweise ist die Vakuumanlage eine sekundär-metallurgische Vakuumanlage. Prinzipiell kann die Vakuumanlage jedwede Vakuumanlage sein. Beispielsweise kann die Vakuumanlage eine Vakuumanlage sein, in welcher ein Stoff in die Gasphase übergeht.

Ferner ist die Erfindung gerichtet auf eine Vakuumanlage mit einem Schutzgassystem, wobei das Schutzgassystem eine Schutzgasquelle und die Vakuumanlage einen mit Innendruck beaufschlagten Innenraum sowie ein zumindest teilweise im Innenraum angeordnetes zu schützendes Gerät aufweist.

Bei der erfindungsgemäßen Vakuumanlage umfasst das Schutzgassystem eine Steuereinheit, welche eingerichtet ist zumindest zum Steuern eines Anströmens zumindest eines in dem Innenraum angeordneten Teils des zu schützenden Geräts mit Schutzgas in Abhängigkeit des Innendrucks.

Das erfindungsgemäße Schutzgassystem kann das zuvor im Zusammenhang mit dem Verfahren erwähnte Schutzgassystem sein. Außerdem können im Zusammenhang mit dem Verfahren erwähnte, gegenständliche Elemente Bestandteile dieses Schutzgassystems sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Schutzgassystem kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Vakuumanlage mit einem Schutzgassystem, welches ein Regelventil aufweist;
- FIG 2: eine Vakuumanlage mit einem Schutzgassystem, welches ein Drei-Wege-Ventil aufweist; und
- FIG 3: eine Vakuumanlage mit einem Schutzgassystem, welches zwei Steuerventile und ein Drosselventil aufweist.

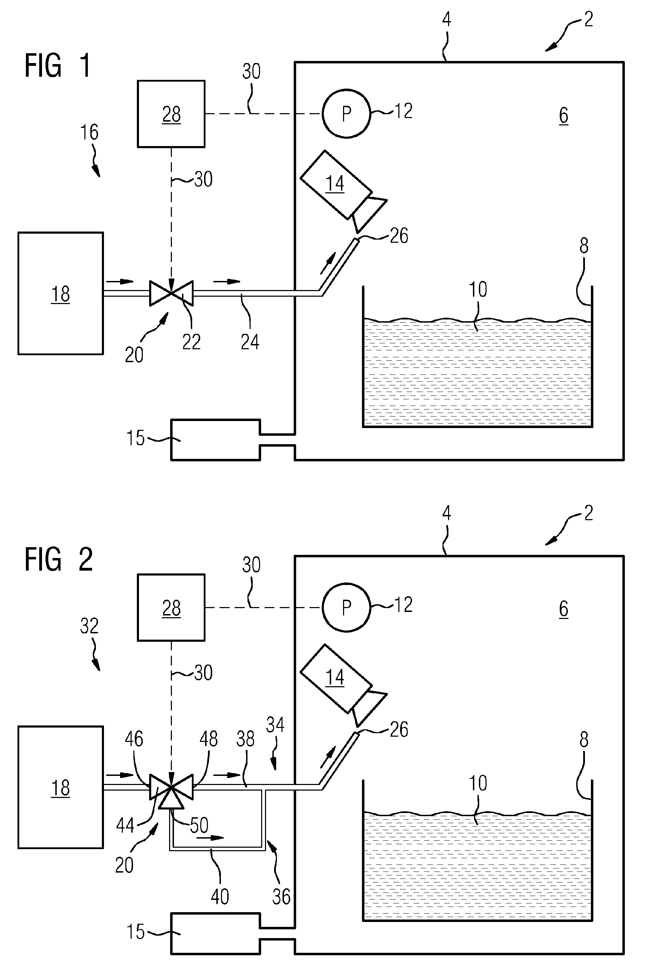

FIG 1 zeigt eine Vakuumanlage 2, welche als eine sekundärmetallurgische Vakuumanlage ausgeführt ist. Die Vakuumanlage 2 weist einen Innenraum 4 auf, in welchem ein Innendruck 6 herrscht. In dem Innenraum 4 der Vakuumanlage 2 ist ein Schmelztiegel 8 der Vakuumanlage 2 angeordnet, in welchem sich Metallschmelze 10, d. h. flüssiges Metall, befindet. Die Metallschmelze 10 wird beispielsweise einer Vakuumbehandlung unterzogen. Außerdem umfasst die Vakuumanlage 2 ein Druckmessgerät 12, welches in dem Innenraum 4 der Vakuumanlage 2 angeordnet ist und den Innendruck 6 in der Vakuumanlage 2 misst.

Weiter weist die Vakuumanlage 2 ein zu schützenden Gerät 14 auf, welches (hier gänzlich) in dem Innenraum 4 der Vakuumanlage 2 angeordnet ist. Das zu schützende Gerät 14 ist als Kamera ausgeführt.

An die Vakuumanlage 2 kann beispielsweise ein Pumpstand 15 mit zumindest einer Vakuumpumpe angeschlossen sein, um als Innendruck 6 einen Unterdruck in der Vakuumanlage 2 zu erzeugen. Der Pumpstand 15 kann Teil der Vakuumanlage 2 oder ein separates Element zu der Vakuumanlage 2 sein.

Weiter zeigt FIG 1 ein Schutzgassystem 16 mit einer Schutzgasquelle 18. In abströmender Richtung der Schutzgasquelle 18 ist eine Ventilanlage 20 angeordnet. In diesem Beispiel umfasst die Ventilanlage 20 ein Regelventil 22, welches kontinuierlich einstellbar ist. Das Regelventil 22 ist in einer Leitung 24 angeordnet, welche an die Schutzgasquelle 18 (in abströmender Richtung) angeschlossen ist.

Ferner weist das Schutzgassystem 18 eine Öffnung 26 auf. Die Öffnung 26 ist in abströmender Richtung der Schutzgasquelle 18 am Ende der Leitung 24 angeordnet. Über die Ventilanlage 20 und über die Öffnung 26 kann dem Innenraum 4 der Vakuumanlage 2 Schutzgas aus der Schutzgasquelle 18 zugeführt werden. Ferner kann das Schutzgas über die Öffnung 26 in den Innenraum 4 der Vakuumanlage 2 entlassen/geblasen werden. Die Strömungsrichtung des Schutzgases in der Leitung 24 ist durch Pfeile dargestellt. Das Schutzgas ist ein Inertgas, beispielsweise Stickstoff.

Außerdem umfasst das Schutzgassystem 16 eine Steuereinheit 28. Die Steuereinheit 28 ist mit dem Druckmessgerät 12 über eine Datenverbindung 30 verbunden. Weiter ist die Steuereinheit 28 mit der Ventilanlage 20, insbesondere dem Regelventil 22, über eine Datenverbindung 30 verbunden. Die Datenverbindung 30 kann über ein Kabel und/oder drahtlos erfolgen. Die Steuereinheit 28 führt ein Steuern bzw. eine Steuerung vollautomatisch durch, insbesondere ohne manuelles Einwirken einer Person.

Das Schutzgas aus der Schutzgasquelle 18 wird dem Innenraum 4 zugeführt, wobei die Zuführung so erfolgt, dass zumindest ein Teil des zu schützenden Geräts 14 von dem Schutzgas angeströmt wird. Das Anströmen wird in Abhängigkeit des Innendrucks 6 gesteuert, insbesondere unter Verwendung der Steuereinheit 28. Dabei wird das Anströmen des zu schützenden Geräts 14 mit Schutzgas gesteuert. Beim Anströmen strömt zumindest ein Teil des Schutzgases an eine und/oder entlang einer Oberfläche des zu schützenden Geräts 14.

Dem Innenraum 4 wird ein Volumenstrom an Schutzgas zugeführt. Ein Parameter des Schutzgases, hier der Volumenstrom des Schutzgases, wird beim Anströmen in Abhängigkeit des Innendrucks 6 gesteuert. Auf diese Weise wird der Volumenstrom an Schutzgas eingestellt.

Insbesondere wird das Regelventil 22 zumindest stufenweise eingestellt. Auf diese Weise wird der Volumenstrom an Schutzgas mittels des Regelventils 22, insbesondere unter Verwendung der Steuereinheit 28, zumindest stufenweise eingestellt.

Falls der Innendruck 6 einen vorgegebenen Innendruck-Schwellwert unterschreitet, dann wird der Volumenstrom an Schutzgas reduziert. Falls der Innendruck 6 den Innendruck-Schwellwert unterschreitet, dann ist der vom Regelventil 22 eingestellte Volumenstrom an Schutzgas umso kleiner, je niedriger der gemessene Innendruck ist. Der Volumenstrom kann dabei zumindest stufenweise eingestellt werden.

Beispielsweise beträgt der Volumenstrom bei einem Innendruck von 1 bar 100 m³/h, was 100% entspricht und damit den maximalen Volumenstrom darstellt. Sinkt der Innendruck 6 und bleibt über den Innendruck-Schwellwert von z. B. 50 mbar, entspricht der Volumenstrom weiterhin dem maximalen Volumenstrom. Wenn der Innendruck 6 den vorgegebenen Innendruck-Schwellwert von z. B. 50 mbar unterschreitet, wird beispielsweise der Volumenstrom auf 20%, d. h. auf 20 m³/h, reduziert. Sinkt der Innendruck 6 weiter, beispielsweise auf 10 mbar, dann wird vom Regelventil 22 der Volumenstrom auf 10%, d. h. auf 10 m³/h, eingestellt/reduziert. Beispielsweise bei einem Innendruck 6 von 5 mbar beträgt der vom Regelventil 22 eingestellte/reduzierte Volumenstrom 5%, d. h. 5 m³/h. Auf diese Weise wird der Volumenstrom an Schutzgas, welcher dem Innenraum 4 zugeführt wird, zumindest stufenweise reduziert.

Ein Vorteil der Erfindung ist, dass durch das Steuern des Anströmens eine deutlich geringere Menge an Schutzgas eingesetzt werden kann als ohne das Steuern des Anströmens. Dadurch verringert sich die Gaslast auf die Vakuumpumpe(n) des Pumpstands 15. Außerdem verringern sich durch die geringere Menge an verbrauchtem Schutzgas die (Betriebs-)Kosten.

FIG 2 zeigt eine Vakuumanlage 2 und ein anderes Schutzgassystem 32. Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In abströmender Richtung der Schutzgasquelle 18 ist eine Ventilanlage 20 angeordnet. Die Ventilanlage 20 ist in einem Leitungssystem 34 angeordnet, welches an die Schutzgasquelle 18 (in abströmender Richtung) angeschlossen ist. Die Strömungsrichtung des Schutzgases im Leitungssystem 34 ist durch Pfeile dargestellt.

Ferner weist das Schutzgassystem 32 eine Öffnung 26 auf, welche in abströmender Richtung der Schutzgasquelle 18 am Ende des Leitungssystems 34 angeordnet ist.

Weiter umfasst das Schutzgassystem 32 eine Parallelschaltung 36 aus einer ersten Leitung 38 und einer zweiten Leitung 40. Vorzugsweise ist die Parallelschaltung 36 in abströmender Richtung der Schutzgasquelle 18 angeordnet. Insbesondere umfasst das Leitungssystem 34 des Schutzgassystems 32 die Parallelschaltung 36. Die erste Leitung 38 der Parallelschaltung 36 ist für einen ersten Volumenstrom ausgelegt und die zweite Leitung 40 der Parallelschaltung 36 ist für einen zweiten Volumenstrom ausgelegt, wobei der zweite Volumenstrom eine Teilmenge des ersten Volumenstroms ist. Die Teilmenge ist beispielsweise 10%, d. h. der zweite Volumenstrom entspricht z. B. 10% des ersten Volumenstroms. Die Teilmenge ist in diesem Beispiel fest vorgegeben. Beispielsweise entspricht der erste Volumenstrom 90 m³/h (für welchen die erste Leitung 38 ausgelegt ist), und entsprechend entspricht der zweite Volumenstrom 9 m³/h (für welchen die zweite Leitung 40 ausgelegt ist).

In diesem Beispiel umfasst die Ventilanlage 20 ein Drei-Wege-Ventil 44. Das Drei-Wege-Ventil 44 weist einen Eingang 46, einen ersten Ausgang 48 sowie einen zweiten Ausgang 50 auf. Die erste Leitung 38 der Parallelschaltung 36 schließt sich an den ersten Ausgang 48 des Drei-Wege-Ventils 44 an und die zweite Leitung 40 der Parallelschaltung 36 schließt sich an den zweiten Ausgang 50 des Drei-Wege-Ventils 44 an.

Die Steuereinheit 28 ist mit der Ventilanlage 20, insbesondere mit dem Drei-Wege-Ventil 44, über eine Datenverbindung 30 verbunden.

Beim Steuern, insbesondere unter Verwendung der Steuereinheit 28, wird über die Ventilanlage 20 eingestellt, welche der Leitungen 38, 40 geöffnet ist/wird. Es können/kann die erste Leitung 38 und/oder die zweite Leitung 40 geöffnet sein/werden. Das heißt, es kann keine der Leitungen 38, 40 oder eine der Leitungen 38, 40 geschlossen sein/werden. Weiter können alle Leitungen 38, 40 geschlossen sein/werden.

Um eine der Leitungen 38, 40 zu öffnen/zu schließen, wird der entsprechende Ausgang 48, 50 des Drei-Wege-Ventils 44 geöffnet/geschlossen, insbesondere unter Verwendung der Steuereinheit 28. Entsprechend können/kann beim Steuern der erste Ausgang 48 und/oder der zweite Ausgang 50 des Drei-Wege-Ventils 44 geöffnet werden/sein. Weiter können beim Steuern beide Ausgange 48, 50 geschlossen werden/sein.

Beträgt der Innendruck 6 beispielsweise 1 bar, dann ist die erste Leitung 38 (und entsprechend auch der erste Ausgang 48) geöffnet. Weiter ist bei einem Innendruck 6 von 1 bar die zweite Leitung 40 (und entsprechen auch der zweite Ausgang 50) geschlossen - prinzipiell könnte die zweite Leitung 40 aber auch geöffnet sein. Sinkt der Innendruck 6 und bleibt über dem Innendruck-Schwellwert von z. B. 10 mbar, so bleibt weiterhin die erste Leitung 38 geöffnet und die zweite Leitung 40 geschlossen. Wenn der Innendruck 6 einen vorgegebenen Innendruck-Schwellwert von z. B. 10 mbar unterschreitet, dann wird über die Ventilanlage 20 die erste Leitung 38 geschlossen und die zweite Leitung 40 geöffnet. Auf diese Weise wird der Volumenstrom an Schutzgas, welcher dem Innenraum 6 zugeführt wird, reduziert.

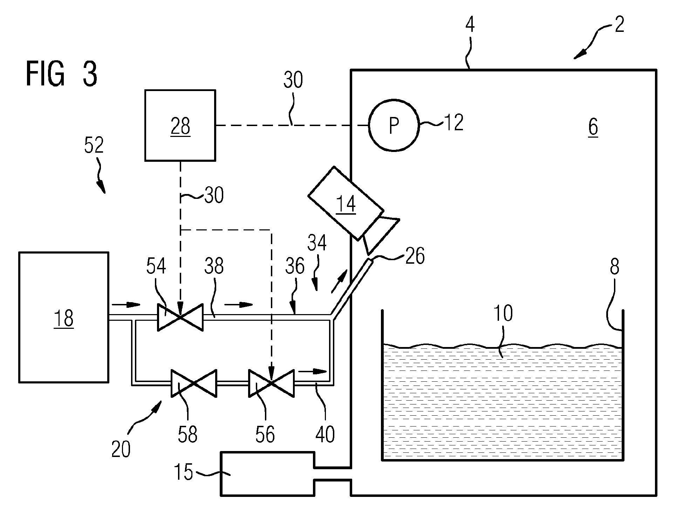

FIG 3 zeigt eine Vakuumanlage 2 und ein weiteres Schutzgassystem 52. Die nachfolgende Beschreibung beschränkt sich im Wesentlichen auf die Unterschiede zum Ausführungsbeispiel aus FIG 2, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Das zu schützende Gerät 14 ist teilweise im Innenraum 4 der Vakuumanlage 2 angeordnet (statt wie in FIG 1 und FIG 2, wo das zu schützende Gerät 14 komplett im Innenraum 4 angeordnet ist). Zumindest ein in dem Innenraum 4 angeordnetes Teil des zu schützenden Geräts 14 wird von dem Schutzgas angeströmt.

Die Ventilanlage 20 umfasst zwei Steuerventile 54, 56 und ein Drosselventil 58. Weiter ist die Ventilanlage 20 in der Parallelschaltung 36 angeordnet.

Das erste Steuerventil 54 ist in der ersten Leitung 38 der Parallelschaltung 36 angeordnet und das zweite Steuerventil 56 sowie das Drosselventil 58 sind in der zweiten Leitung 40 der Parallelschaltung 36 angeordnet. Auf diese Weise ist das Drosselventil 58 in Reihe zu dem zweiten Steuerventil 56 angeordnet.

Die Steuereinheit 28 ist mit der Ventilanlage 20, insbesondere mit den zwei Steuerventilen 54, 56, über eine Datenverbindung 30 verbunden.

Um eine der Leitungen 38, 40 zu öffnen/zu schließen, wird das entsprechende Steuerventil 54, 56 geöffnet/geschlossen, insbesondere unter Verwendung der Steuereinheit 28. Beim Steuern, insbesondere mittels der Steuereinheit 28, können/kann das erste Steuerventil 54 und/oder das zweite Steuerventil 56 geöffnet werden/sein. Entsprechend können/kann die erste Leitung 38 und/oder die zweite Leitung 40 geöffnet werden/sein. Weiter können beim Steuern alle Steuerventile 54, 56 geschlossen werden/sein.

Der zweite Volumenstrom, für welchen die zweite Leitung 40 (und die darin angeordneten Ventile 56, 58) ausgelegt ist (sind), entspricht einer Teilmenge des ersten Volumenstroms, für welchen die erste Leitung 38 (und das darin angeordnete erste Steuerventil 54) ausgelegt ist (sind).

Auf diese Weise wird der Volumenstrom an Schutzgas, welcher dem Innenraum 6 zugeführt wird, reduziert.

Die Teilmenge kann mittels des Drosselventils 58 manuell eingestellt werden, beispielsweise auf 10%.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: Vakuumanlage
- 4: Innenraum
- 6: Innendruck
- 8: Schmelztiegel
- 10: Metallschmelze
- 12: Druckmessgerät
- 14: Gerät
- 15: Pumpstand
- 16: Schutzgassystem
- 18: Schutzgasquelle
- 20: Ventilanlage
- 22: Regelventil
- 24: Leitung
- 26: Öffnung
- 28: Steuereinheit
- 30: Datenverbindung
- 32: Schutzgassystem
- 34: Leitungssystem
- 36: Parallelschaltung
- 38: Leitung
- 40: Leitung
- 44: Drei-Wege-Ventil
- 46: Eingang
- 48: Ausgang
- 50: Ausgang
- 52: Schutzgassystem
- 54: Steuerventil
- 56: Steuerventil
- 58: Drosselventil

## Patentansprüche

1. Verfahren zum Betreiben eines Schutzgassystems (16, 32, 52) bei einer Vakuumanlage (2), wobei das Schutzgassystem (16, 32, 52) eine Schutzgasquelle (18) und die Vakuumanlage (2) einen mit Innendruck (6) beaufschlagten Innenraum (4) sowie ein zumindest teilweise im Innenraum (4) angeordnetes zu schützendes Gerät (14) aufweist,
bei dem Schutzgas aus der Schutzgasquelle (18) dem Innenraum (4) zugeführt wird, wobei die Zuführung so erfolgt, dass zumindest ein in dem Innenraum (4) angeordnetes Teil des zu schützenden Geräts (14) von dem Schutzgas angeströmt wird, **dadurch gekennzeichnet, dass**
ein Parameter des Schutzgases beim Anströmen in Abhängigkeit des Innendrucks (6) zumindest gesteuert wird.

2. Verfahren nach Anspruch 1,
**dadurch gekennzeichnet, dass** der Parameter des Schutzgases ein Volumenstrom an Schutzgas ist, welcher Volumenstrom an Schutzgas dem Innenraum (4) zugeführt wird.

3. Verfahren nach Anspruch 2,
**dadurch gekennzeichnet, dass** unterhalb eines vorgegebenen Innendruck-Schwellwerts der Volumenstrom an Schutzgas reduziert wird.

4. Verfahren nach einem der vorhergehenden Ansprüche,
**dadurch gekennzeichnet, dass** in abströmender Richtung der Schutzgasquelle (18) ein Regelventil (22) angeordnet ist, welches zumindest stufenweise, insbesondere kontinuierlich, eingestellt wird.

5. Verfahren nach Anspruch 4,
**dadurch gekennzeichnet, dass**, falls der Innendruck (6) einen Innendruck-Schwellwert unterschreitet, dann ist ein vom Regelventil (22) eingestellter Volumenstrom an Schutzgas umso kleiner, je niedriger der Innendruck (6) ist.

6. Verfahren nach einem der vorhergehenden Ansprüche,
**dadurch gekennzeichnet, dass** das Schutzgassystem (16, 32, 52) eine Ventilanlage (20) umfasst sowie eine Parallelschaltung (36) aus einer ersten Leitung (38) und einer zweiten Leitung (40) umfasst, die Ventilanlage (20) sowie die Parallelschaltung (36) in abströmender Richtung der Schutzgasquelle (18) angeordnet sind, die erste Leitung (38) der Parallelschaltung (36) für einen ersten Volumenstrom ausgelegt ist und die zweite Leitung (40) der Parallelschaltung (36) für einen zweiten Volumenstrom ausgelegt ist, wobei der zweite Volumenstrom eine Teilmenge des ersten Volumenstroms ist, und wobei über die Ventilanlage (20) eingestellt wird, welche der Leitungen (38, 40) geöffnet ist.

7. Verfahren nach Anspruch 6,
**dadurch gekennzeichnet, dass**, falls der Innendruck (6) einen Innendruck-Schwellwert unterschreitet, dann wird über die Ventilanlage (20) die erste Leitung (38) geschlossen und die zweite Leitung (40) geöffnet.

8. Verfahren nach einem der vorhergehenden Ansprüche,
**dadurch gekennzeichnet, dass** das Steuern zumindest teilautomatisch durchgeführt wird.

9. Verfahren nach einem der vorhergehenden Ansprüche,
**dadurch gekennzeichnet, dass** das Schutzgas ein Inertgas, beispielsweise Stickstoff, ist.

10. Verfahren nach einem der vorhergehenden Ansprüche,
**dadurch gekennzeichnet, dass** die Vakuumanlage (2) eine sekundär-metallurgische Vakuumanlage ist.

11. Vakuumanlage (2) mit einem Schutzgassystem (16, 32, 52),
wobei das Schutzgassystem (16, 32, 52) eine Schutzgasquelle (18) und die Vakuumanlage (2) einen mit Innendruck (6) beaufschlagten Innenraum (4) sowie ein zumindest teilweise im Innenraum (4) angeordnetes zu schützendes Gerät (14) aufweist, **dadurch gekennzeichnet, dass**
das Schutzgassystem (16, 32, 52) eine Steuereinheit (28) umfasst, welche eingerichtet ist zumindest zum Steuern eines Anströmens zumindest eines in dem Innenraum (4) angeordneten Teils des zu schützenden Geräts (14) mit Schutzgas in Abhängigkeit des Innendrucks (6).

12. Vakuumanlage (2) nach Anspruch 11,
**dadurch gekennzeichnet, dass**
das Schutzgassystem (16, 32, 52) eine Ventilanlage (20) umfasst sowie eine Parallelschaltung (36) aus einer ersten Leitung (38) und einer zweiten Leitung (40) umfasst, die Ventilanlage (20) sowie die Parallelschaltung (36) in abströmender Richtung der Schutzgasquelle (18) angeordnet sind, die erste Leitung (38) der Parallelschaltung (36) für einen ersten Volumenstrom ausgelegt ist und die zweite Leitung (40) der Parallelschaltung (36) für einen zweiten Volumenstrom ausgelegt ist, wobei der zweite Volumenstrom eine Teilmenge des ersten Volumenstroms ist.

13. Vakuumanlage (2) nach Anspruch 12,
**dadurch gekennzeichnet, dass** die Ventilanlage (20) ein Drei-Wege-Ventil (44) mit einem ersten Ausgang (48) und einem zweiten Ausgang (50) umfasst, wobei sich die erste Leitung (38) der Parallelschaltung (36) an den ersten Ausgang (48) des Drei-Wege-Ventils (44) und die zweite Leitung (40) der Parallelschaltung (36) an den zweiten Ausgang (50) des Drei-Wege-Ventils (44) anschließt.

14. Vakuumanlage (2) nach Anspruch 11 oder 12,
**dadurch gekennzeichnet, dass** die Ventilanlage (20) ein erstes Steuerventil (54), ein zweites Steuerventil (56) sowie ein Drosselventil (58) umfasst, wobei das erste Steuerventil (54) in der ersten Leitung (38) angeordnet ist und das zweite Steuerventil (56) sowie das Drosselventil (58) in der zweiten Leitung (40) angeordnet sind.
